# EUROPEAN PATENT SPECIFICATION

(11) **EP 4 046 785 B1**
(45) Date of publication and mention of the grant of the patent: **11.03.2026**
(21) Application number: 20876581.8
(22) Date of filing: 07.08.2020
(51) Int. Cl.: C08F 212/08, C08F 297/06, C08F 236/06, C08F 210/02

(54) **METHOD FOR CONTROLLING HARDNESS OF MOLDED BODY, AND MOLDED BODY**
VERFAHREN ZUR STEUERUNG DER HÄRTE EINES FORMKÖRPERS UND FORMKÖRPER
PROCÉDÉ POUR L'AJUSTEMENT DE LA DURETÉ D'UN CORPS MOULÉ ET CORPS MOULÉ

(30) Priority: 18.10.2019 JP 2019190825
(43) Date of publication of application: 24.08.2022
(73) Proprietor: BRIDGESTONE CORPORATION, Chuo-ku Tokyo 104-8340 (JP)
(72) Inventor: YAMAGATA, Yusuke, Tokyo 104-8340 (JP); TAKANO, Shigenaga, Tokyo 104-8340 (JP); YOSHIDA, Masaki, Tokyo 104-8340 (JP); KOTANI, Kyohei, Tokyo 104-8340 (JP)
(74) Representative: Marks & Clerk LLP
(86) International application number: PCT/JP2020/030496
(87) International publication number: WO 2021/075131

(56) References cited:
- EP-A1- 0 891 997
- EP-A1- 3 363 838
- JP-A- H1 135 766
- DATABASE WPI Week 200654, Derwent World Patents Index; AN 2006-525217, XP002807944

## Description

### TECHNICAL FIELD

The present invention relates to a method for controlling hardness of a molded body, and a molded body.

### BACKGROUND ART

Conventionally known examples of a rubber material excellent in various properties such as durability include a copolymer obtained by using at least a conjugated diene compound and a non-conjugated olefin compound as monomers and copolymerizing them under the presence of a predetermined catalyst (PTL 1). The polymerization reaction may be controlled in a reactor by, for example, changing the mole ratio of the monomers used, thereby changing the average composition of the resulting copolymer product (PTL 2).

### CITATION LIST

### Patent Literature

PTL 1: WO 2015/190072 A1
PTL 2: EP 0 891 997 A1

### SUMMARY OF THE INVENTION

### (Technical Problem)

When a molded body is to be manufactured by using such a diene-based rubber material as described above, the manufacturing method generally includes: appropriately blending the diene-based rubber material with a filler, a vulcanizing agent such as sulfur, a vulcanization accelerator, and the like according to necessity; uniformly mixing and kneading the blend by a mixer, to obtain a rubber composition; and then subjecting the rubber composition to heating under a predetermined condition. As a result of the processes described above, a molded body obtained by the manufacturing method naturally has physical properties (such as hardness) of which distributions are substantially uniform throughout the entirety of the molded body.

In some cases, however, depending on the type of the application of the molded body, there may be a demand that hardness required of each part of the molded body should vary. The demand may possibly be met by, for example, manufacturing a plurality of members having respective hardness values different from each other by changing compositions of rubber compositions thereof and then attaching them to each other so as to be integral with each other by appropriate means, to obtain a molded body as intended. However, the aforementioned method inevitably forms seams (joints) in a resulting molded body, thereby possibly causing cracks in the molded body in the long run. Moreover, such seams as described above are not preferable from an aesthetic point of view, as well.

An object of the present disclosure is therefore to provide a method for controlling hardness of a seamless molded body at an arbitrary position.
Further, another object of the present disclosure is to provide a seamless molded body having hardness controlled at an arbitrary position by said method.

### (Solution to Problem)

The primary features of the present disclosure for achieving the aforementioned objects are as follows.

A method for controlling hardness of a molded body in a first aspect of the present disclosure is a method for controlling hardness of a seamless molded body at an arbitrary position thereof, the seamless molded body being composed of two or more copolymers each having a crystalline portion and an elastomer portion, the method comprising:
preparing two or more molding members which are different from each other in a ratio of a crystalline portion and an elastomer portion therein by respectively using two or more copolymers which are different from each other in a ratio of a crystalline portion and an elastomer portion therein;
forming a composite member in which a ratio of a crystalline portion and an elastomer portion varies at an arbitrary position thereof, by using the molding members by making them abut with each other at cut faces thereof or laminating them or placing pieces of one molding member on another molding member;
forming the composite member to a configuration as desired;
heating the composite member thus formed, in a mold, thereby melting the crystalline portion thereof; and
cooling and solidifying the composite member thus heated, to obtain a seamless molded body having hardness controlled at an arbitrary position.
According to the method for controlling hardness of a molded body in the first aspect of the present disclosure, it is possible to control hardness of a seamless molded body at an arbitrary position.

A method for controlling hardness of a molded body in a second aspect of the present disclosure is a method for controlling hardness of a seamless molded body at an arbitrary position thereof, the seamless molded body being composed of two or more copolymers each having a crystalline portion and an elastomer portion, the method comprising:
preparing two or more molding members which are different from each other in a distribution of a crystalline portion and an elastomer portion therein by respectively using two or more copolymers which are different from each other in a distribution of a crystalline portion and an elastomer portion in a polymer chain thereof;
forming a composite member in which a distribution of a crystalline portion and an elastomer portion varies at an arbitrary position thereof, by using the molding members by making them abut with each other at cut faces thereof or laminating them or placing pieces of one molding member on another molding member;
forming the composite member to a configuration as desired;
heating the composite member thus formed, in a mold, thereby melting the crystalline portion thereof; and
cooling and solidifying the composite member thus heated, to obtain a seamless molded body having hardness controlled at an arbitrary position.
According to the method for controlling hardness of a molded body in the second aspect of the present disclosure, it is possible to control hardness of a seamless molded body at an arbitrary position.

A method for controlling hardness of a molded body in a third aspect of the present disclosure is a method for controlling hardness of a seamless molded body at an arbitrary position thereog, the seamless molded body being composed of two or more copolymers each having a crystalline portion and an elastomer portion, the method comprising:
preparing two or more molding members which are different from each other in crystallinity by respectively using two or more copolymers which are different from each other in crystallinity;
forming a composite member of which crystallinity varies at an arbitrary position thereof, by using the molding members by making them abut with each other at cut faces thereof or laminating them or placing pieces of one molding member on another molding member;
forming the composite member to a configuration as desired;
heating the composite member thus formed, in a mold, thereby melting the crystalline portion thereof; and
cooling and solidifying the composite member thus heated, to obtain a seamless molded body having hardness controlled at an arbitrary position.
According to the method for controlling hardness of a molded body in the third aspect of the present disclosure, it is possible to control hardness of a seamless molded body at an arbitrary position.

In a preferable example of the method for controlling hardness of a molded body of the present disclosure, the crystalline portions of the two or more copolymers include the same type of monomer unit therein, respectively. It is possible to more reliably obtain an effect caused by melting and integration thereafter of the crystalline portion of each of the copolymers in this case.

In another preferable example of the method for controlling hardness of a molded body of the present disclosure, the elastomer portions of the two or more copolymers include the same type of monomer unit therein, respectively. Durability of the molded body improves in this case.

In yet another preferable example of the method for controlling hardness of a molded body of the present disclosure, the crystalline portion of the copolymer includes a non-conjugated olefin unit therein. The crystalline portion of the copolymer is hard in this case, whereby the copolymer can easily contribute to increasing hardness at an arbitrary position of the molded body.

In yet another preferable example of the method for controlling hardness of a molded body of the present disclosure, the elastomer portion of the copolymer includes a conjugated diene unit therein. The elastomer portion of the copolymer is soft in this case, whereby the copolymer can easily contribute to decreasing hardness at an arbitrary position of the molded body.

In yet another preferable example of the method for controlling hardness of a molded body of the present disclosure, at least one of the copolymers includes an aromatic vinyl unit as a monomer unit derived from an aromatic vinyl compound therein. Fracture resistance of the molded body improves in this case.

In the method for controlling hardness of a molded body of the present disclosure, it is preferable that the copolymer is a copolymer including a non-conjugated olefin unit and a conjugated diene unit, and no (0 mol %) butylene unit therein.

In the method for controlling hardness of a molded body of the present disclosure, it is preferable that the copolymer is a copolymer including a non-conjugated olefin, a conjugated diene unit and an aromatic vinyl unit, and no (0 mol %) butylene unit therein.

In yet another preferable example of the method for controlling hardness of a molded body of the present disclosure, the molded body formed by the molding members is pressurized when it is heated. Production of a molded body having a desired configuration is facilitated in this case.

A molded body of the present disclosure is a seamless molded body having hardness controlled at an arbitrary position by the method for controlling hardness of a molded body described above.
The molded body of the present disclosure is seamless and has hardness controlled at an arbitrary position.

### (Advantageous Effect)

According to the present disclosure, it is possible to provide a method for controlling hardness of a seamless molded body at an arbitrary position.
Further, according to the present disclosure, it is possible to provide a seamless molded body having hardness controlled at an arbitrary position by said method.

### BRIEF DESCRIPTION OF THE DRAWINGS

In the accompanying drawing, wherein:

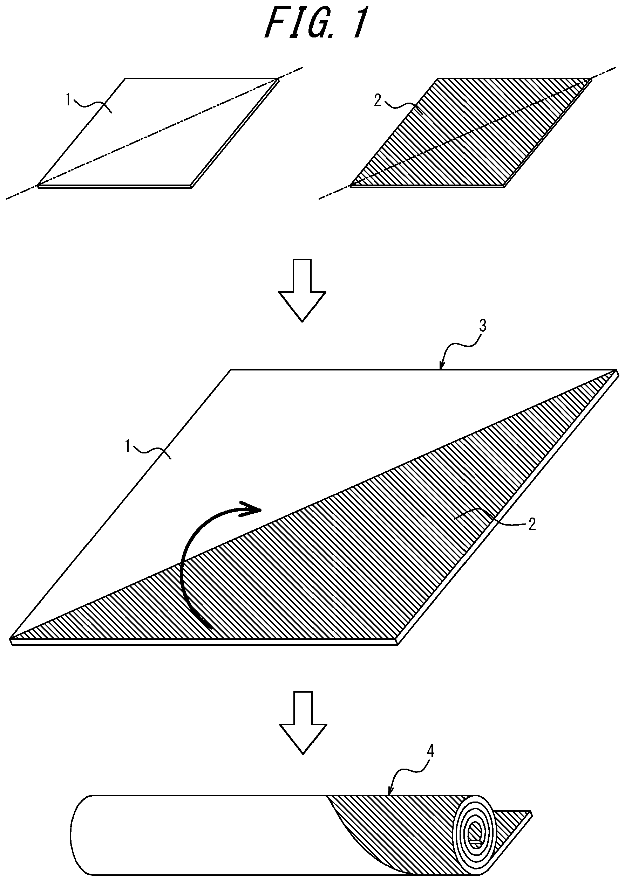

FIG. 1 is a schematic drawing showing an example of a process of forming a molded body according to an embodiment of a method for controlling hardness of a molded body of the present disclosure.

### DETAILED DESCRIPTION

Hereinafter, a method for controlling hardness of a molded body, as well as a molded body having hardness controlled by the method, of the present disclosure will be demonstratively described in detail based on embodiments thereof.

### < Method for controlling hardness of molded body >

A method for controlling hardness of a molded body of each embodiment (which method will occasionally be referred to as "the controlling method of the present embodiment" hereinafter) of the present disclosure is a method for controlling hardness of a seamless molded body at an arbitrary position, the seamless molded body being composed of a copolymer having a crystalline portion and an elastomer portion, the method including:
preparing two or more molding members which are different from each other by using two or more copolymers which are different from each other and then forming a molded body by using the molding members (forming process);
heating the molded body thus formed by using the molding members, thereby melting the crystalline portion of the molded body (heating process); and
cooling and solidifying the molded body thus heated (cooling process).

Specifically, in a method for controlling hardness of a molded body of a first embodiment, two or more types of molding members which are different from each other in a ratio of a crystalline portion and an elastomer portion therein are prepared by using two or more types of copolymers which are different from each other in a ratio of a crystalline portion and an elastomer portion therein; and then a molded body in which a ratio of a crystalline portion and an elastomer portion varies at an arbitrary position is formed by using the molding members. A ratio of the crystalline portion and the elastomer portion varies at an arbitrary position/arbitrary positions in the molded body thus formed by using the molding members, because types of the copolymers constituting the relevant arbitrary sections of the molded body are changed accordingly. In this regard, it is possible to vary hardness of the molded body at an arbitrary position thereof by changing a ratio of the crystalline portion and the elastomer portion in the relevant arbitrary section of the molded body because the crystalline portion is hard and the elastomer portion is soft. The molded body thus formed by using the molding members is then subjected to heating, so that the crystalline portion in the molded body is melted and the seam/seams between the respective molding members disappears/disappear. Thereafter, the molded body is cooled and solidified. The resulting molded body has no seam and of which hardness has been controlled at an arbitrary position/arbitrary positions thereof.
Accordingly, it is possible to control hardness of a seamless molded body at an arbitrary position by the method for controlling hardness of a molded body of the first embodiment.

In a method for controlling hardness of a molded body of a second embodiment, two or more types of molding members which are different from each other in a distribution of a crystalline portion and an elastomer portion therein are prepared by using two or more types of copolymers which are different from each other in a distribution of a crystalline portion and an elastomer portion in a polymer chain thereof; and then a molded body in which a distribution of a crystalline portion and an elastomer portion varies at an arbitrary position thereof is formed by using the molding members. A distribution of the crystalline portion and the elastomer portion varies at an arbitrary position/arbitrary positions in the molded body thus formed by using the molding members, because types of the copolymers constituting the relevant arbitrary sections of the molded body are changed accordingly.
In this regard, it is possible to vary hardness of the molded body at an arbitrary position thereof by changing a distribution of the crystalline portion and the elastomer portion in the relevant arbitrary section of the molded body because a section where the crystalline portion occupies a relatively long chain length is relatively hard and a section where the crystalline portion occupies a relatively short chain length is relatively soft. The molded body thus formed by using the molding members is then subjected to heating, so that the crystalline portion in the molded body is melted and the seam/seams between the respective molding members disappears/disappear. Thereafter, the molded body is cooled and solidified. The resulting molded body has no seam and of which hardness has been controlled at an arbitrary position/arbitrary positions thereof.
Accordingly, it is possible to control hardness of a seamless molded body at an arbitrary position by the method for controlling hardness of a molded body of the second embodiment.

In a method for controlling hardness of a molded body of a third embodiment, two or more types of molding members which are different from each other in crystallinity are prepared by using two or more types of copolymers which are different from each other in crystallinity; and then a molded body in which crystallinity varies at an arbitrary position thereof is formed by using the molding members. Crystallinity varies at an arbitrary position/arbitrary positions in the molded body thus formed by using the molding members, because types of the copolymers constituting the relevant arbitrary sections of the molded body are changed accordingly.
In this regard, it is possible to vary hardness of the molded body at an arbitrary position thereof by changing crystallinity in the relevant arbitrary sections of the molded body because a section thereof where crystallinity is high is hard and a section thereof where crystallinity is low is soft. The molded body thus formed by using the molding members is then subjected to heating, so that the crystalline portion in the molded body is melted and the seam/seams between the respective molding members disappears/disappear. Thereafter, the molded body is cooled and solidified. The resulting molded body has no seam and of which hardness has been controlled at an arbitrary position/arbitrary positions thereof.
Accordingly, it is possible to control hardness of a seamless molded body at an arbitrary position by the method for controlling hardness of a molded body of the third embodiment.

The controlling method of the present embodiment can be carried out by using, for example, a 3D printer, with no restriction thereto.

In the present specification, a "crystalline portion" in a copolymer represents a portion which can be recognized as such when the analysis of the copolymer by using a differential scanning calorimeter (DSC) according to JIS K 7121-1987 has confirmed that the portion has the melting point.

Further, in the present specification, an "elastomer portion" in a copolymer represents a portion which can be recognized as such when the portion (of the copolymer) exhibits rubber elasticity.

Yet further, in connection with a "seam" in a molded body, a molded body is recognized as seamless in the present specification only when there exists no difference between an atomic force microscope (AFM) image of a cross section at an arbitrary position of the molded body and an AFM image of a cross section of another molded body integrally formed by using a single type of copolymer.

As described above, the forming process is a process of: preparing two or more molding members which are different from each other, by using two or more copolymers each of which has a crystalline portion and an elastomer portion such that the two or more copolymers are thereby different from each other; and forming a molded body by using the molding members. Details of the copolymers to be used will be described later.

FIG. 1 shows an example of the forming process in the controlling method of the present embodiment. In the example, at first a sheet-shaped molding member 1 composed of a first copolymer and a sheet-shaped molding member 2 composed of a second copolymer are prepared and cut, respectively, as indicated by the uppermost drawings of FIG. 1. Next, the sheet-shaped molding member 1 composed of the first copolymer and the sheet-shaped molding member 2 composed of the second copolymer thus cut, respectively, are made to abut with each other at the cut faces thereof, to form a sheet-shaped composite member 3, as indicated by the drawing in the middle of FIG. 1. The sheet-shaped composite member 3 is subjected to heating according to necessity and then rolled up into a rod-like shape, as indicated by the lowermost drawing of FIG. 1. The rod-shaped composite member 4 can be subjected to the heating process.

In a molded body obtained by subjecting the rod-shaped composite member 4 described above to the heating process and the cooling process, one end of the molded body has hardness substantially derived from the first copolymer and the hardness continuously (linearly) changes toward the other end of the molded body, so that the other end has hardness substantially derived from the second copolymer.

Although the rectangular sheet-shaped molding member 1 composed of the first copolymer and the rectangular sheet-shaped molding member 2 composed of the second copolymer are employed in the example shown in FIG. 1, configurations of the molding members prepared in the forming process are not particularly restricted in the present embodiment.
Further, although each of the two sheet-shaped molding members 1, 2 is cut along a diagonal line of the rectangular sheet in FIG. 1, the cutting position is not particularly limited or the molding members need not necessarily be cut in the present embodiment. Yet further, although the two sheet-shaped molding members 1, 2 are made to abut with each other at the cut faces thereof in FIG. 1, the manner in which the sheet-shaped molding members are made to abut with each other is not particularly restricted in the present embodiment. For example, the two or more sheet-shaped molding members respectively composed of two or more copolymers may be laminated so as to abut with each other in a laminated manner or a plurality of one sheet-shaped molding member pieces composed of one copolymer may be placed on the other sheet-shaped molding member composed of the other copolymer such that the one member pieces respectively abut with the other molding member sheet.
Yet further, although the composite member is rolled up to a rod-like shape and subjected to the heating process in the example of FIG. 1, a configuration into which the composite member is formed prior to the heating process is not particularly restricted in the present embodiment.

Two or more copolymers, each of which has a crystalline portion and an elastomer portion such that the copolymers are thereby different from each other, are used as the molding members 1, 2 in the present embodiment. In this regard, it is acceptable in preparation of the molding members to optionally blend a reinforcing filler such as carbon black and/or silica, an antioxidant, a crosslinking agent such as sulfur in an appropriate manner, with the copolymers.

The subsequent heating process is a process of heating the molded body (the composite member 3, 4) formed by using the molding members. The heating process melts the crystalline portion of the molded body. The heating temperature during the heating process is preferably equal to or higher than the melting points of the two or more copolymers, so that the crystalline portion in each of the copolymers is thoroughly melted and a seamless molded body can be reliably obtained. In a case where two or more melting points are found due to the presence of two or more copolymers, the heating temperature is preferably set to be equal to or higher than the highest melting point among the two or more copolymers. Specifically, the heating temperature is preferably at least 10 °C higher and more preferably at least 20 °C higher than the highest melting point observed among the copolymers. In general, the heating temperature is preferably ≥ 130 °C and more preferably ≥ 140 °C. The upper limit of the heating temperature is not particularly restricted but preferably ≤ 250 °C.

In the heating process, it is preferable that the molded body (the composite member 3, 4) formed by using the molding members is subjected to pressurization, as well as heating. Production of a molded body having a desired configuration is facilitated by subjecting the molded body to a pressurization treatment. Pressure in pressurization during the heating process (i.e., pressure at which the molded body is subjected to heating pressurization) may be in the range of 3 to 7 MPa and the pressurizing time may be in the range of 3 to 60 minutes.

The subsequent cooling process is a process of cooling the molded body thus heated. The cooling process solidifies the melted crystalline portion, whereby a molded body with no seams (joints) can be obtained. The molded body may be cooled, for example, to the room temperature by using a cooling means such as a cooling plate. The cooling time may be in the range of 3 to 60 minutes.

It is preferable that hardness of the molded body obtained by the controlling method of the present embodiment gradually increases/decreases along a line linking two arbitrary positions of the molded body. In other words, it is preferable that the molded body obtained by the controlling method of the present embodiment has no portion where hardness changes in a stepwise manner. It is possible to obtain such a molded body as described above by appropriately selecting types of the copolymers for use in the method.

The molded body may be heated again after the cooling process, so that the molded body thus heated is further formed into a desired configuration such as a sheet-like shape and cooled again, to obtain a molded body having the desired configuration, in the controlling method of the present embodiment.

### < Copolymer having crystalline portion and elastomer portion >

Next, a copolymer having a crystalline portion and an elastomer portion for use in the present embodiment will be described.

Two or more copolymers, each of which has a crystalline portion and an elastomer portion such that the copolymers are thereby different from each other, are employed in the present embodiment. It is possible to control hardness of a molded body at an arbitrary position/arbitrary positions by using two or more copolymers which are different from each other. In this regard, two or more copolymers which are different from each other in a ratio of a crystalline portion and an elastomer portion therein are employed in the first embodiment described above. Two or more copolymers which are different from each other in a distribution of a crystalline portion and an elastomer portion in a polymer chain thereof are employed in the second embodiment described above. Two or more copolymers which are different from each other in crystallinity are employed in the third embodiment described above.

The copolymer described above may be a copolymer in which at least a portion (e.g., a terminal end) of a polymer chain thereof has been modified by a coupling reaction or the like.

It is preferable that the copolymer includes a conjugated diene unit (a monomer unit derived from a conjugated diene compound) therein. The conjugated diene unit in the copolymer mainly contributes to formation of an elastomer portion of the copolymer. Accordingly, in other words, it is preferable that the elastomer portion of the copolymer includes a conjugated diene unit therein. An elastomer portion including a conjugated diene unit therein is generally soft and thus allows easy reduction of hardness at an arbitrary position of a molded body. It should be noted in this regard that a conjugated diene unit having a trans structure (e.g., a conjugated diene unit having a trans-1,4 bond), although it is a conjugated diene unit, exbibits crystallinity and may form a crystalline portion of a copolymer.

The conjugated diene compound as a monomer of the copolymer preferably has four to eight carbon atoms. Specific examples of the conjugated diene compound include 1,3-butadiene, isoprene, 1,3-pentadiene, 2,3-dimethyl-1,3-butadiene, and the like. Either a single type or combination of two or more types of these examples may be used as the conjugated diene compound. The conjugated diene compound as a monomer of the copolymer preferably includes 1,3-butadiene and/or isoprene, more preferably is composed exclusively of 1, 3-butradiene and/or isoprene, and still more preferably is composed exclusively of 1,3-butadiene in terms of forming a satisfactory elastomer portion in the copolymer. In other words, the conjugated diene unit in the copolymer preferably includes a 1,3-butadiene unit (which will occasionally be referred to simply as a "butadiene unit" hereinafter) and/or an isoprene unit, more preferably is constituted exclusively of a butadiene unit and/or an isoprene unit, and still more preferably is constituted exclusively of butadiene units.

A cis-1,4 bond content of the conjugated diene unit, in a portion of the copolymer, is preferably in the range of 50 to 100 %. When the cis-1,4 bond content is ≥ 50 %, the conjugated diene unit successfully contributes to making the portion of the copolymer satisfactorily soft as an elastomer portion. It should be noted that the cis-1,4 bond content described above represents a content of cis-1,4 bond in the conjugated dine units in entirety thereof and does not represent a content of cis-1,4 bond in the copolymer in its entirety.

A trans-1,4 bond content of the conjugated diene unit, in a portion of the copolymer, is preferably in the range of 50 to 100 %. When the trans-1,4 bond content is ≥ 50 %, the conjugated diene unit successfully contributes to making the portion of the copolymer satisfactorily hard as a crystalline portion. It should be noted that the trans-1,4 bond content described above represents a content of trans-1,4 bond in the conjugated dine units in entirety thereof and does not represent a content of trans-1,4 bond in the copolymer in its entirety.

In the present embodiment, in a case where two types of copolymers (the first copolymer and the second copolymer) are employed and each of the first copolymer and the second copolymer contains a conjugated diene unit therein, a difference between a content (mol %) of the conjugated diene unit in the first copolymer and a content (mol %) of the conjugated diene unit in the second copolymer may be set to be 10 mol % or more. By this arrangement, a difference in hardness between two arbitrary positions of a resulting molded body can be made satisfactorily large. From the same point of view, the difference in the conjugated diene unit content between the first copolymer and the second copolymer may be set to be 20 mol % or more, or 25 mol % or more. The difference in the conjugated diene unit content between the first copolymer and the second copolymer is, however, preferably ≤ 60 mol %, more preferably ≤ 55 mol %, still more preferably ≤ 50 mol %, yet still more preferably ≤ 45 mol %, and particularly preferably ≤ 40 mol %, in terms of suppressing deterioration in durability of a resulting molded body due to an exceedingly large difference in hardness between two positions thereof.

It is preferable that the elastomer portions of the two or more copolymers (the two or more copolymers which are different in type from each other) contain the same type of monomer unit, respectively. Durability of a resulting molded body improves in this case.

It is preferable that the crystalline portions of the two or more copolymers contain the same type of monomer unit, respectively. An integration effect caused by melting of the crystalline portions of the respective copolymers can be reliably obtained in this case.

It is preferable that the crystalline portion of the copolymer includes a non-conjugated olefin unit (a monomer unit derived from a non-conjugated olefin compound) therein. The non-conjugated olefin unit in the copolymer mainly contributes to formation of a crystalline portion of the copolymer. A crystalline portion including a non-conjugated olefin unit therein is generally hard and thus allows easy increase in hardness at an arbitrary position of a molded body. It should be noted in this regard that a region of non-conjugated olefin units where adjacent polymer chains of the units are not regularly aligned fails to exhibit crystallinity, although it is a non-conjugated olefin unit region. Such non-conjugated olefin units not exhibiting crystallinity as described above may possibly form an elastomer portion of the copolymer.
As described above, two or more copolymers which are different from each other in a ratio of a crystalline portion and an elastomer portion therein are employed in the first embodiment. In this respect, it is preferable that the two or more copolymers for use in the embodiment are different from each other in a ratio of the non-conjugated olefin unit contributing to formation of the crystalline portion and the conjugated diene unit contributing to formation of the elastomer portion.

The non-conjugated olefin compound as a monomer of the copolymer preferably has two to ten carbon atoms. Specific examples of the non-conjugated olefin compound described above include: α-olefin such as ethylene, propylene, 1-butene, 1-pentene, 1-hexene, 1-heptene, 1-octene, and the like; a heteroatom-substituted alkene compound such as vinyl pivalate, 1-phenylthio ethene, N-vinylpyrrolidone; and the like. Either a single type or combination of two or more types of these examples may be used as the non-conjugated olefin compound. The non-conjugated olefin compound as a monomer of the copolymer is preferably an acyclic non-conjugated olefin compound in terms of forming a satisfactory crystalline portion in the copolymer. The acyclic non-conjugated olefin compound is preferably α-olefin, more preferably α-olefin including ethylene, and particularly preferably constituted exclusively of ethylene. In other words, the non-conjugated olefin unit in the copolymer is preferably an acyclic non-conjugated olefin unit. The acyclic non-conjugated olefin unit is preferably α-olefin unit, more preferably an α-olefin unit including an ethylene unit, and particularly preferably constituted exclusively of an ethylene unit.

In the present embodiment, in a case where two types of copolymers (the first copolymer and the second copolymer) are employed and each of the first copolymer and the second copolymer contains a non-conjugated olefin unit therein, a difference between a content (mol %) of the non-conjugated olefin unit in the first copolymer and a content (mol %) of the non-conjugated olefin unit in the second copolymer may be set to be 10 mol % or more. By this arrangement, a difference in hardness between two arbitrary positions of a resulting molded body can be made satisfactorily large. From the same point of view, the difference in the non-conjugated olefin unit content between the first copolymer and the second copolymer may be set to be 20 mol % or more, or 25 mol % or more. The difference in the non-conjugated olefin unit content between the first copolymer and the second copolymer is, however, preferably ≤ 65 mol %, more preferably ≤ 60 mol %, still more preferably ≤ 55 mol %, yet still more preferably ≤ 50 mol %, and particularly preferably ≤ 45 mol %, in terms of suppressing deterioration in durability of a resulting molded body due to an exceedingly large difference in hardness between two positions thereof.

The copolymer of the present disclosure has a weight average molecular weight (Mw) in terms of polystyrene preferably in the range of 10,000 to 10,000,000, more preferably in the range of 100,000 to 9,000,000, and still more preferably in the range of 150,000 to 8,000,000. The weight average molecular weight (Mw) of the copolymer, of 10,000 or more, ensures that the copolymer has satisfactory mechanical strength and the Mw of the copolymer, of 10,000,000 or less, ensures good workability of the copolymer.

Further, the copolymer of the present disclosure has a number average molecular weight (Mn) in terms of polystyrene preferably in the range of 10,000 to 10,000,000, more preferably in the range of 50,000 to 9,000,000, and still more preferably in the range of 100,000 to 8,000,000. The number average molecular weight (Mn) of the copolymer, of 10,000 or more, ensures that the copolymer has satisfactory mechanical strength and the Mn of the copolymer, of 10,000,000 or less, ensures good workability of the copolymer.

Yet further, the copolymer of the present disclosure has a molecular weight distribution [Mw/Mn (the weight average molecular weight/the number average molecular weight)] preferably in the range of 1.00 to 4.00. It is possible to make physical properties of the copolymer satisfactorily uniform by setting the molecular weight distribution of the copolymer to be ≤ 4.00. From the same point of view, the molecular weight distribution of the copolymer is more preferably ≤ 3.50 and still more preferably ≤ 3.00. On the other hand, the molecular weight distribution of the copolymer is preferably ≥ 1.50 and more preferably ≥ 1.80.

A weight average molecular weight (Mw), a number average molecular weight (Mn), and a molecular weight distribution (Mw/Mn) described above are determined, relative to those of polystyrene as a standard reference material, by gel permeation chromatography (GPC).

In the copolymer of the present disclosure, the melting point thereof measured by differential scanning calorimetry (DSC) is preferably equal to or higher than 30 °C and equal to or lower than 180 °C. A degree of crystallinity of the copolymer increases and thus resistance to crack growth thereof further improves when the melting point of the copolymer is equal to or higher than 30 °C. The temperature need not be raised exceedingly high during the heating process and thus workability further improves when the melting point of the copolymer is equal to or lower than 180 °C. From the same point of view, it is preferable that each of the two or more copolymers described above has the melting point equal to or lower than 140 °C. In a case where two or more melting points are observed in the two or more copolymers, the highest melting point is employed in the heating process.

In the copolymer of the present disclosure, endothermic energy at the endothermic peak thereof in the range of 0 °C to 150 °C, measured by a differential scanning calorimeter (DSC), is preferably equal to or higher than 1 J/g and equal to or lower than 150 J/g. When the endothermic energy at the endothermic peak of the copolymer is ≥ 1 J/g, a degree of crystallinity of the copolymer is high enough and crack growth resistance of the copolymer further improves. When the endothermic energy at the endothermic peak of the copolymer is ≤ 150 J/g, workability of the copolymer further improves. From the same point of view, it is more preferable that each of the two or more copolymers described above has the endothermic energy at the endothermic peak in the range of 10 J/g to 120 J/g.

In the copolymer of the present disclosure, the glass transition temperature (Tg) measured by a differential scanning calorimeter (DSC) is preferably equal to or lower than 0 °C and more preferably in the range of -100 °C to -10 °C. Workability further improves when the glass transition temperature of the copolymer is equal to or lower than 0 °C.

In the copolymer of the present disclosure, a degree of crystallinity (ΔH1/ΔH0 × 100), which is often referred to simply as "crystallinity", is preferably in the range of 0.5 % to 50 %. When the degree of crystallinity of the copolymer is equal to or higher than 0.5 %, crystallinity attributed to the non-conjugated olefin unit is satisfactorily ensured and thus the crack growth resistance further improves. When the degree of crystallinity of the copolymer is equal to or lower than 50 %, workability during the mixing and kneading process improves and workability in attaching the molding members prepared from the copolymer to each other improves, as well, due to improved tackiness of the copolymer. From the same point of view, the degree of crystallinity of the copolymer is more preferably ≥ 1 % and still more preferably in the range of 1.5 % to 45 % (inclusive of 1.5 % and 45 %).
In the present specification, a degree of crystallinity of the copolymer is calculated as a ratio (ΔH1/ΔH0 ×100) of the endothermic energy (ΔH1) at the endothermic peak of the copolymer with respect to the crystal melting energy (ΔH0) of polyethylene, measured by a differential scanning calorimeter (DSC).

Two or more copolymers, which are different in crystallinity from each other, are employed in the third embodiment described above. In this regard, in a case where two types of copolymers which are different in crystallinity from each other, i.e., the first copolymer and the second copolymer, are employed, a difference between a degree of crystallinity (%) of the first copolymer and a degree of crystallinity (%) of the second copolymer may be set to be 3 % or more. By this arrangement, a difference in hardness between two arbitrary positions of a resulting molded body can be made satisfactorily large. From the same point of view, the difference in degree of crystallinity between the first copolymer and the second copolymer may be set to be 5 % or more, or 10 % or more. The difference in in degree of crystallinity between the first copolymer and the second copolymer is, however, preferably ≤ 60 %, more preferably ≤ 50 %, still more preferably ≤ 40 %, yet still more preferably ≤ 30 %, particularly preferably ≤ 25 %, and most preferably ≤ 20 %, in terms of suppressing deterioration in durability of a resulting molded body due to an exceedingly large difference in hardness between two positions thereof.

The physical properties such as a melting point, the endothermic energy at the endothermic peak, the glass transition temperature and a degree of crystallinity, of the copolymer, described above can be measured by the methods described in Examples, respectively.

In the present disclosure, examples of the copolymer include a binary copolymer composed of the conjugated diene unit and the non-conjugated olefin unit described above (which binary copolymer will occasionally be referred to simply as a "binary copolymer" hereinafter). Examples of such a binary copolymer as described above and a manufacturing method thereof include those disclosed in WO 2012/014459 A1.

A content of the conjugated diene unit in the binary copolymer is preferably > 0 mol % and ≤ 7 mol % because then a copolymer which is excellent in elongation and weatherproofness can be obtained. From the same point of view, a content of the conjugated diene unit in the binary copolymer is more preferably ≤ 60 mol %, still more preferably ≤ 50 mol %, and yet still more preferably ≤ 40 mol %.

A content of 1,2-adduct (including 3,4-adduct) in the conjugated diene unit of the binary copolymer is preferably ≤ 5 % because then heat resistance and bending fatigue resistance of the copolymer further improves. From the same point of view, a content of 1,2-adduct (including 3,4-adduct) in the conjugated diene unit of the binary copolymer is more preferably ≤ 2.5 % and still more preferably ≤ 1.0 %. It should be noted that the content of 1,2-adduct (including 3,4-adduct) in the conjugated diene unit represents a content thereof in the conjugated dine units in their entirety and does not represent a content thereof in the copolymer in its entirety. Further, a content of 1,2-adduct (including 3,4-adduct) in the conjugated diene unit is synonymous with a content of 1,2-vinyl bond content in a case where the conjugated diene unit is a butadiene unit.

A content of the non-conjugated olefin unit in the binary copolymer is preferably ≥ 30 mol % and < 100 mol % because then fracture resistance at high temperature of the binary copolymer effectively improves. From the same point of view, a content of the non-conjugated olefin unit in the binary copolymer is more preferably ≥ 40 mol %, still more preferably ≥ 50 mol %, and particularly preferably ≥ 60 mol %.

In the present embodiment, it is preferable that at least one of the copolymers contains an aromatic vinyl unit (a monomer unit derived from an aromatic vinyl compound) therein. Fracture resistance of the copolymer itself and thus fracture resistance of a resulting molded body both improve when the copolymer contains an aromatic vinyl unit therein. From the same point of view, it is more preferable that each of the two or more copolymers contains an aromatic vinyl unit therein in the present embodiment. An aromatic viny unit in the copolymer may possibly contribute to formation of a crystalline portion or formation of an elastomer portion, depending on the type of a chain structure thereof.

The aromatic vinyl compound as a monomer of the copolymer preferably has eight to ten carbon atoms. Specific examples of the aromatic vinyl compound include styrene, o-methylstyrene, m-methylstyrene, p-methylstyrene, o, p-dimethyl styrene, o-ethylstyrene, m-ethylstyrene, p-ethylstyrene, and the like. Either a single type or combination of two or more types of the examples may be used as the aromatic vinyl compound. The aromatic vinyl compound as a monomer of the copolymer preferably contains styrene and more preferably composed exclusively of styrene. In other words, the aromatic vinyl unit of the copolymer preferably contains a styrene unit therein and more preferably constituted exclusively of a styrene unit.
It should be noted that a main chain of the copolymer does not include an aromatic ring of the aromatic vinyl unit unless the aromatic ring of the aromatic vinyl unit of the main chain is bonded to a structural unit adjacent to the aromatic vinyl unit.

In the present disclosure, examples of the copolymer described above include a multi-component copolymer containing at least the conjugated diene unit, the non-conjugated olefin unit, and the aromatic vinyl unit therein (which multi-component copolymer will occasionally be referred to simply as a "multi-component copolymer" hereinafter). The multi-component copolymer may either be composed exclusively of the conjugated diene unit, the non-conjugated olefin unit, and the aromatic vinyl unit or further contain another monomer unit.

A content of the conjugated diene unit in the multi-component copolymer is preferably in the range of 1 mol % to 60 mol %. The content, of ≥ 1 mol %, is preferable because then a copolymer which is excellent in elongation can be obtained. The content, of ≤ 60 mol %, is preferable because then a resulting copolymer has excellent weatherproofness. From the same point of view, a content of the conjugated diene unit in the multi-component copolymer is more preferably ≥ 3 mol %, still more preferably ≥ 5 mol %, and particularly preferably ≥ 8 mol %; and more preferably ≤ 55 mol %, still more preferably ≤ 50 mol %, and yet still more preferably ≤ 45 mol %.

In the multi-component copolymer of the present disclosure, a content of the non-conjugated olefin unit is preferably ≥ 30 mol % and ≤ 97 mol %. When a content of the non-conjugated olefin unit is ≥ 30 mol % of the multi-component copolymer in its entirety, a content of the conjugated diene unit and/or a content of the aromatic vinyl unit decreases accordingly, whereby weatherproofness and/or fracture resistance (breaking strength (Tb) in particular) at high temperature of the multi-component copolymer improves. When the content of the non-conjugated olefin unit is ≤ 97 mol %, a content of the conjugated diene unit and/or a content of the aromatic vinyl unit increases accordingly, whereby fracture resistance (elongation at break (Eb) in particular) at high temperature of the multi-component copolymer improves. From the same point of view, a content of the non-conjugated olefin unit in the multi-component copolymer is more preferably ≥ 35 mol %, still more preferably ≥ 38 mol %; and more preferably ≤ 95 mol %, still more preferably ≤ 90 mol %.

In the multi-component copolymer of the present disclosure, a content of the aromatic vinyl unit is preferably ≥ 2 mol % and ≤ 35 mol %. The content of the aromatic vinyl unit of ≥ 2 mol % enhances fracture resistance at high temperature. Effects caused by the conjugated diene unit and the non-conjugated olefin unit are conspicuous when the content of the aromatic vinyl unit is ≤ 35 mol %. From the same point of view, a content of the aromatic vinyl unit in the multi-component copolymer is more preferably ≥ 3 mol %, still more preferably ≥ 5 mol %; and more preferably ≤ 30 mol %, still more preferably ≤ 25 mol %, yet still more preferably ≤ 20 mol %, and particularly preferably ≤ 17 mol %.

The multi-component copolymer may further contain structural units other than the conjugated diene unit, the non-conjugated olefin unit, and the aromatic vinyl unit. However, a content of such other structural units as described above is preferably ≤ 30 mol %, more preferably ≤ 20 mol %, still more preferably ≤ 10 mol %, and particularly preferably 0 mol % in terms of reliably obtaining a desired effect. That is, it is particularly preferable that the multi-component copolymer contains no structural units other than the conjugated diene unit, the non-conjugated olefin unit, and the aromatic vinyl unit.

In the binary copolymer or the multi-component copolymer of the present disclosure, a content of a butylene unit is preferably 0 mol %. Accordingly, it is preferable that the binary copolymer or the multi-component copolymer of the present disclosure does not contain a polymer obtained by hydrogenation of butadiene or a hydrogenated product of a styrene-butadiene copolymer such as styrene-ethylene/butylene-styrene (SEBS) copolymer therein.
In other words, it is preferable that the copolymer of the present disclosure is a copolymer composed of a non-conjugated olefin unit and a conjugated diene unit and that a content of a butylene unit in the copolymer is 0 mol %.
Alternatively, it is preferable that the copolymer of the present disclosure is a copolymer composed of a non-conjugated olefin unit, a conjugated diene unit, and an aromatic vinyl unit and that a content of a butylene unit in the copolymer is 0 mol %.

It is preferable that the multi-component copolymer is a polymer obtained by polymerization using at least a conjugated diene compound, a non-conjugated olefin unit, and an aromatic vinyl compound as monomers in terms of ensuring satisfactory crack growth resistance, weatherproofness, and crystallinity of the multi-component copolymer. In other words, the multi-component copolymer is preferably a multi-component copolymer containing a conjugated diene unit, a non-conjugated olefin unit, and an aromatic vinyl unit, more preferably a terpolymer composed exclusively of a conjugated diene unit, a non-conjugated olefin unit, and an aromatic vinyl unit, and still more preferably a terpolymer composed exclusively of a butadiene unit, an ethylene unit, and a styrene unit. In the present disclosure, the term "a conjugated diene unit" may subsume conjugated diene units of different bond types. For example, it is understood that the copolymer contains "a conjugated diene unit" even in a case where the copolymer contains both a butadiene unit having a cis-1,4 bond and a butadiene unit having a trans-1,4 bond.

It is preferable that in the multi-component copolymer of the present disclosure a content of the conjugated diene unit is in the range of 1-60 mol %, a content of the non-conjugated olefin unit is in the range of 30-97 mol %, and a content of the aromatic vinyl unit is in the range of 2-35 mol %. Crack growth resistance further improves and weatherproofness improves, as well, in this case.

It is preferable that a main chain of the multi-component copolymer of the present disclosure is constituted of only acyclic structures because then crack growth resistance of the multi-component copolymer can be further improved. NMR is employed as a primary measurement means for determining whether a main chain of the multi-component copolymer is constituted of only acyclic structures or not. Specifically, when a peak derived from a cyclic structure existing in a main chain (e.g., any of peaks appearing in a range of 10 ppm to 24 ppm in ¹³C-MNR spectroscopy chart in cases of three-membered, four-membered, and five-membered cyclic structures) is not observed, the result indicates that the main chain of the multi-component copolymer is constituted exclusively of acyclic structures.

The multi-component copolymer described above can be manufactured by a polymerization process using a conjugated diene compound, a non-conjugated olefin compound, and an aromatic vinyl compound as monomers and optionally further by a coupling process, a washing process and other processes.

In the present disclosure, it is preferable in manufacturing the multi-component copolymer to first charge only a non-conjugated olefin compound and an aromatic vinyl compound without adding a conjugated diene compound thereto and allow the two compounds thus charged to be polymerized under the presence of a polymerization catalyst, because a conjugated diene compound is generally more reactive than a non-conjugated olefin compound and an aromatic vinyl compound when in particular the catalyst composition described below is used, whereby it will presumably be difficult to cause the non-conjugated olefin compound and/or the aromatic vinyl compound to be satisfactorily polymerized under the presence of the conjugated diene compound. In this regard, it is generally also difficult due to the characteristics of the catalyst to cause the conjugated diene compound to be exclusively polymerized in advance and then cause the non-conjugated olefin compound and the aromatic vinyl compound to be polymerized additionally.

Any polymerization method such as solution polymerization, suspension polymerization, liquid-phase bulk polymerization, emulsion polymerization, vapor-phase polymerization, or solid-phase polymerization can be used for the polymerization process. In a case where a solvent is used in a relevant polymerization reaction, any solvent is acceptable as long as the solvent is inactive in the polymerization reaction. Examples of the solvent include toluene, cyclohexane, n-hexane, and the like.

The polymerization process may be carried out by either a single step or multiple (i.e., two or more) steps. The polymerization process carried out by a single step represents a process of effecting polymerization by bringing all monomers to be polymerized (i.e., a conjugated diene compound, a non-conjugated olefin compound, an aromatic vinyl compound and other monomer(s), preferably a conjugated diene compound, a non-conjugated olefin compound, and an aromatic vinyl compound) to simultaneous reactions. The polymerization process carried out by multiple steps includes: a process of forming a polymer by bringing a portion/all of one/two or more monomer(s) to polymerization reactions (the first polymerization step); and at least one process of then adding the remaining portion(s) of the first polymerization step monomer(s) and the remaining type/species of monomer(s) which have not been used in the first polymerization step, to the polymer formed in the first polymerization step, to complete polymerization (the second polymerization step to the final polymerization step). It is preferable that the polymerization process is carried out by multiple steps in manufacturing a multi-component copolymer in particular.

In the polymerization process, the relevant polymerization reactions are preferably carried out in an atmosphere of inert gas, desirably in an atmosphere of nitrogen gas or argon gas. The polymerization temperature in the polymerization reactions, although it is not particularly restricted, is preferably in the range of -100 °C to 200 °C and may be around the room temperature, for example. Pressure during the polymerization reactions is preferably in the range of 0.1 MPa to 10.0 MPa in terms of capturing a sufficient amount of a conjugated diene compound into the polymerization reaction system. Reaction time spared for the polymerization reactions is preferably in the range of 1 second to 10 days, for example, although it is not particularly restricted. The reaction time may be appropriately set depending on conditions such as type of the catalyst, polymerization temperature, and the like. The polymerization process may be carried out by either a single step or multiple (i.e., two or more) steps, as described above.

The polymerization reaction can be stopped by using a polymerization terminator such as methanol, ethanol, isopropanol in the aforementioned polymerization process of the conjugated diene compound.

The aforementioned polymerization process is carried out preferably by multiple steps and more preferably by: a first step of mixing a first monomer raw material including at least an aromatic vinyl compound with a polymerization catalyst, to obtain a polymerization mixture; and a second step of introducing a second monomer raw material including at least one selected from the group consisting of a conjugated diene compound, a non-conjugated olefin compound and an aromatic vinyl compound, to the polymerization mixture. It is still more preferable that the first monomer raw material does not include a conjugated diene compound but the second monomer raw material includes a conjugated diene compound.

The first monomer raw material for use in the first step may include a non-conjugated olefin compound, as well as an aromatic vinyl compound. Further, the first monomer raw material may contain either the entirety or a portion of the aromatic vinyl compound for use. It should be noted that a non-conjugated olefin compound is to be included in at least one of the first monomer raw material and the second monomer raw material.

Any polymerization method such as solution polymerization, suspension polymerization, liquid-phase bulk polymerization, emulsion polymerization, vapor-phase polymerization, or solid-phase polymerization can be used for a polymerization method for obtaining the polymerization mixture in the first step. In a case where a solvent is used in a relevant polymerization reaction, any solvent is acceptable as long as the solvent is inactive in the polymerization reaction. Examples of the solvent include toluene, cyclohexane, n-hexane, and the like.

The second monomer raw material for use in the second step preferably includes i) only a conjugated diene compound or ii) a conjugated diene compound and a non-conjugated olefin compound or iii) a conjugated diene compound and an aromatic vinyl compound or iv) a conjugated diene compound, a non-conjugated olefin compound, and an aromatic vinyl compound.

In a case where the second monomer raw material includes, other than a conjugated diene compound, at least one selected from the group consisting of a non-conjugated olefin compound and an aromatic vinyl compound, those monomer raw materials may be introduced into the polymerization mixture after mixing the monomer raw materials and a solvent, etc. with each other or, alternatively, the respective monomer raw materials may be introduced separately (without being mixed with each other) into the polymerization mixture. The respective monomer raw materials may be added either all together or one by one with a time lag therebetween. A method for introducing the second monomer raw material(s) into the polymerization mixture in the second step is not particularly restricted but it is preferable to continuously add the second monomer raw material(s) to the polymerization mixture with controlling or metering flow rates of the respective monomer raw materials. In this regard, in a case where a monomer raw material which is in a gaseous state under the conditions of the polymerization reaction system (for example, ethylene or the like as a non-conjugated olefin compound which is in a gaseous state at the room temperature and at the standard atmospheric pressure) is used, the monomer raw material can be introduced into the polymerization reaction system at a prescribed pressure.

In the second step described above, the polymerization process is preferably carried out in a reaction vessel in an atmosphere of inert gas, desirably in an atmosphere of nitrogen gas or argon gas. The temperature (the reaction temperature) in the second step, although it is not particularly restricted, is preferably in the range of -100 °C to 200 °C and may be around the room temperature, for example. Too high reaction temperature may adversely affect selectivity of cis-1,4 bond of the conjugated diene unit in a reaction. Pressure in the second step, although it is not particularly restricted, is preferably in the range of 0.1 MPa to 10.0 MPa in terms of capturing a sufficient amount of monomers of a conjugated diene compound and the like into the polymerization reaction system. Time (reaction time) spared for the second step is preferably in the range of 0.1 hour to 10 days, for example. The reaction time may be appropriately set depending on conditions such as type of the polymerization catalyst, reaction temperature, and the like.

The polymerization reaction can be stopped by using a polymerization terminator such as methanol, ethanol, isopropanol in the second step.

The coupling process is a process of carrying out a reaction (a coupling reaction) for modifying at least a portion, e.g., a terminal end, of a polymer chain of the multi-component copolymer obtained by the polymerization process described above. The coupling reaction is preferably carried out in the coupling process when a conversion ratio in the polymerization reaction has reached 100 %.

Type of a coupling agent for use in the coupling reaction is not particularly restricted and can be appropriately selected according to the purpose. Examples of the coupling agent include: (i) a tin-containing compound such as bis(maleic acid-1-octadecyl)dioctyl tin (IV); (ii) an isocyanate compound such as 4,4'-diphenylmethane diisocyanate; (iii) an alkoxysilane compound such as glycidyl propyltrimethoxysilane; and the like. Either a single type or combination of two or more types of these examples may be used as the coupling agent. Bis(maleic acid-1-octadecyl)dioctyl tin (IV) is preferable as the coupling agent among these examples in terms of high reaction efficiency and relatively little gel generation. It is possible to increase the number average molecular weight (Mn) of a resulting multi-component copolymer by carrying out a coupling reaction.

The rinsing process mentioned above is a process of rinsing a multi-component copolymer obtained by the aforementioned polymerization process. Type of a medium (solvent) for use in the rinsing process is not particularly restricted and can be appropriately selected according to the purpose. Examples of the medium or solvent include methanol, ethanol, isopropanol, and the like. An acid (such as hydrochloric acid, sulfuric acid, nitric acid) may be added, for use, to such a solvent as described above in the rinsing process when a Lewis acid-derived catalyst is used as the polymerization catalyst, in particular. An amount to be added, of the acid, is preferably 15 mol % or less with respect to the solvent. Addition of the acid by an amount exceeding 15 mol % with respect to the solvent may cause the acid to remain in the copolymer, possibly adversely affecting a mixing and kneading process and a vulcanization reaction.
An amount of catalyst residue in the copolymer can be reduced to an appropriate level by the rinsing process.

In the present disclosure, the polymerization process of polymerizing a conjugated diene compound, a non-conjugated olefin compound, and an aromatic vinyl compound described above preferably includes a process or operation of polymerizing the respective monomers under the presence of at least one of the following components (A)-(F) as catalyst components. Use of at least one of the following components (A)-(F) in the polymerization process is preferable and use of at least two of the following components (A)-(F) in combination as a catalyst composition therein is more preferable, in this regard.
Component (A): a rare earth element compound or a reactant resulted from a reaction between the rare earth element compound and a Lewis base
Component (B): an organic metal compound
Component (C): aluminoxane
Component (D): an ionic compound
Component (E): a halogen compound
Component (F): a compound having a cyclopentadiene skeleton, selected from the group consisting of substituted/unsubstituted cyclopentadiene (a compound having a cyclopentadienyl group), substituted/unsubstituted indene (a compound having an indenyl group), and substituted/unsubstituted fluorene (a compound having a fluorenyl group)

The components (A)-(F) described above can be prepared and applied to polymerization by referring to, for example, WO 2018/092733 A1 or the like.

### < Molded body >

A molded body according to one embodiment of the present disclosure is a seamless molded body having hardness controlled at an arbitrary position by the method for controlling hardness of a molded body described above.

The molded body of the present disclosure is excellent in durability because it is seamless. Further, the molded body is suitably applicable to various applications because hardness thereof can be controlled at an arbitrary position/arbitrary positions.

In the molded body of the present embodiment, a difference in hardness between two arbitrary positions thereof with a 5 cm interval therebetween is preferably in the range of 3 to 50. Setting the difference in hardness described above to be 3 or more ensures the intended effect caused by the difference in hardness and setting the difference in hardness to be 50 or lower successfully prevents generation of cracks due to a sharp change in rigidity from occurring.

Application of the molded body is not particularly restricted. The molded body is widely applicable to, for example, a rubber article such as a tire, a conveyor belt, a hose, a rubber track, a seismic isolation device, an antivibration device, and the like; and a resin article such as vehicle body parts, transportation infrastructure parts (poles, guardrails on roads, etc.), medical supplies, and the like.

### EXAMPLES

The present disclosure will be described further in detail by Examples hereinafter. The present disclosure is not restricted by any means by these Examples.

### (Preparation of first copolymer)

A copolymer was obtained by: charging 63 g of a cyclohexane solution containing 277 g of styrene and 15 g of butadiene into a thoroughly dry 2000 mL pressure-resistant stainless reactor;
charging, on the other hand, 0.299 mmol of mono (1,3-bis(tertbutyldimethylsilyl)indenyl)bis(bis(dimethylsilyl)amide) gadolinium complex {1,3-[(t-Bu)Me₂Si]₂C₉H₅Gd[N(SiHMe₂)₂]₂}, 0.329 mmol of dimethylanilinium tetrakis(pentafluorophenyl)borate [Me₂NHPhB(C₆F₅)₄], and 3.29 mmol of disobutylaluminum hydride into a glass vessel in a glovebox under nitrogen atmosphere and dissolving the substances in 115 mL of cyclohexane, to obtain a catalyst solution;
adding the catalyst solution thus obtained, to the pressure-resistant stainless reactor, and heating the mixture in the reactor to 70 °C;
then carrying out copolymerization at 70 °C by adding ethylene to the pressure-resistant stainless reactor at pressure of the ethylene: 1.5 MPa and charging 544 mL of a cyclohexane solution containing 135 g of 1,3-butadiene into the reactor over 267 minutes;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining a copolymer.
A first copolymer (terpolymer) including a butadiene unit, an ethylene unit, and a styrene unit therein was prepared as described above. It was confirmed that the first copolymer exhibited rubber elasticity.

### (Preparation of second copolymer)

A second copolymer (terpolymer) including a butadiene unit, an ethylene unit, and a styrene unit therein was prepared in the same manner as the preparation of the first copolymer, except that i) mono (1,3-bis(tert-butyldimethylsilyl)indenyl) bis(bis(dimethylsilyl)amide) gadolinium complex in the preparation of the first copolymer was replaced with mono ((1-benzyldimethylsilyl -3-methyl)indenyl)bis(bis(dimethylsilyl)amide) gadolinium complex {(1-BnMe₂Si-3-Me)C₉H₅Gd[N(SiHMe₂)₂]₂}, ii) the amounts of the relevant substances for use, in the preparation of the first copolymer, were changed as needed, and iii) the amounts of the respective monomers for use, in the preparation of the first copolymer, were changed as needed. It was confirmed that the second copolymer exhibited rubber elasticity.

The following physical properties were measured for each of the copolymers thus prepared. The results are shown in Table 1.

### (1) Number average molecular weight (Mn), weight average molecular weight (Mw), and molecular weight distribution (Mw/Mn)

The number average molecular weight (Mn), the weight average molecular weight (Mw), and the molecular weight distribution (Mw/Mn) in terms of polystyrene standard were determined relative to monodisperse polystyrene as a standard reference material, respectively, for each of the copolymers thus prepared, by using gel permeation chromatography [GPC: HLC-8121GPC/HT manufactured by Tosoh Corporation, column: GMH_{HR}-H(S)HT × 2 manufactured by Tosoh Corporation, detector: a differential refractive index detector (RI)]. The measurement temperature is 40 °C.

### (2) Contents of ethylene unit, butadiene unit and styrene unit >

Contents (mol %) of ethylene unit, butadiene unit and styrene unit in each of the copolymers thus prepared were determined from integration ratios of respective peaks in ¹H-NMR spectrum (100 °C, d-tetrachloroethane reference: 6 ppm).

### (3) Melting point (Tm)

Melting point (Tm1, Tm2) of each of the copolymers thus prepared was measured according to JIS K 7121-1987 by using a differential scanning calorimeter (DSC) "DSCQ2000" manufactured by TA Instruments Japan.

### (4) Glass transition temperature (Tg)

The glass transition temperature (T_{g}) of each of the copolymers thus prepared was measured according to JIS K 7121-1987 by using a differential scanning calorimeter (DSC) "DSCQ2000" manufactured by TA Instruments Japan.

### (5) Degree of crystallinity

Each of the copolymer samples thus prepared was heated from -150 °C to 150 °C at a temperature-increasing rate of 10 °C/minute, so that an endothermic peak energy (endothermic energy at the endothermic peak) (ΔH1) in the range of 0 °C to 150 °C, an endothermic peak energy (ΔH2) in the range of 0 °C to 100 °C, and an endothermic peak energy (ΔH3) in the range of 100 °C to 150 °C, of the copolymer sample, were measured, respectively. Further, crystal melting energy (ΔH0) of polyethylene having a crystal component ratio: 100 % was measured in a manner similar to the measurement of ΔH1, ΔH2, and ΔH3.

A degree of crystallinity (%) derived from ethylene unit (non-conjugated olefin unit) was calculated from a ratio (ΔH1/ΔH0 ×100) of the endothermic peak energy (ΔH1) of the copolymer sample with respect to the crystal melting energy (ΔH0) of the polyethylene. Further, a degree of crystallinity (%) derived from ethylene unit (non-conjugated olefin unit) in the range of 0 °C to 100 °C was calculated from a ratio (ΔH2/ΔH0 × 100) of the endothermic peak energy (ΔH2) in the range of 0 °C to 100 °C of the copolymer sample with respect to the crystal melting energy (ΔH0) of the polyethylene.

Yet further, a degree of crystallinity (%) derived from ethylene unit (non-conjugated olefin unit) in the range of 100 °C to 150 °C was calculated from a ratio (ΔH3/ΔH0 × 100) of the endothermic peak energy (ΔH3) in the range of 100 °C to 150 °C of the copolymer sample with respect to the crystal melting energy (ΔH0) of the polyethylene. The endothermic peak energy of each of the copolymer samples and the crystal melting energy of polyethylene were measured, respectively, by a differential scanning calorimeter (DSC) "DSCQ2000" manufactured by TA Instruments Japan.

### (6) Confirmation of acyclic structure of main chain

The structure of a main chain was analyzed for each of the copolymers thus prepared, by the method described below. It was confirmed that each of the copolymers thus prepared had a main chain constituted exclusively of acyclic structures because no peak was observed in the range of 10 ppm to 24 ppm in the¹³C-NMR spectrum chart thereof.

**[Table 1]**

| | Content of monomer unit (mol%) | | | Molecular weight | | | Physical properties | | | |
|---|---|---|---|---|---|---|---|---|---|---|
| | Ethylene unit | Butadiene unit | Styrene unit | Mn (×10³) | Mw (×10³) | Mw/Mn | Degree of crystallinity (% ) | Melting point Tm 1 (°C) | Melting point Tm 2 (°C) | Tg (°C) |
| First copolymer (relatively soft) | 38 | 45 | 17 | 141 | 428 | 3 | 1.4 (0-100°C) | 43 | 123 | -54 |
| | | | | | | | 0.4 (100-150°C) | | | |
| | | | | | | | 1.8 (0-150°C) | | | |
| Second copolymer (relatively hard) | 87 | 8 | 5 | 85 | 280 | 3.3 | 14.2 (0-100°C) | 50 | 115 | -30 |
| | | | | | | | 5.0 (100-150°C) | | | |
| | | | | | | | 19.2 (0-150°C) | | | |

### (Preparation and evaluation of molded body)

A forming process shown in FIG. 1 was employed in preparation of a molded body sample. First, each of the first copolymer and the second copolymer was formed into a rectangular sheet-like shape (300 mm × 300 × thickness 1 mm). Next, each of the sheets (the molding members) was cut along a relevant diagonal line of the rectangular configuration thereof by a conventional method and a half of the sheet thus cut, of the first copolymer, and a half of the sheet thus cut, of the second copolymer, were made to abut with each other at the cut faces thereof, whereby a rectangular composite sheet (a composite member) was obtained. The rectangular composite sheet thus obtained was subjected to heating at 160 °C for 1 minute, rolled up to a rod-like shape, placed in a metal mold, and then subjected to pressurization at 5 MPa and heating at 180 °C for at least 5 minutes. Thereafter, the composite member was cooled by a cooling plate such that the temperature thereof dropped to the room temperature in 5 minutes, whereby a rod-shaped molded body sample (length: 254 mm) was prepared.

When an atomic force microscope (AFM) image of a cross section of the rod-shaped molded body sample thus prepared and an AFM image of a cross section of a rod-shaped molded body sample formed by using a single type of copolymer were observed, no difference was found therebetween. Accordingly, it was confirmed that the molded body sample thus prepared was seamless.

Further, hardness (surface hardness) was measured at three positions, i.e., the respective end portions and the intermediate portion, of the rod-shaped molded body sample (length : 254 mm) thus prepared, by using a durometer "CL-150" manufactured by KOBUNSHI KEIKI CO., LTD., according to JIS K 6253-3 (Type A durometer). The hardness values thus measured at one end portion, the intermediate portion, and the other end portion of the rod-shaped molded body sample were 94, 78, 67 (points), whereby a gradual increase (decrease) in hardness of the molded body sample was confirmed.

### INDUSTRIAL APPLICABILITY

The method for controlling hardness of a molded body of the present disclosure can be utilized for controlling hardness of a seamless molded body at an arbitrary position.

### REFERENCE SIGNS LIST

- 1, 2: Molding members

- 3: Sheet-shaped composite member
- 4: Rod-shaped composite member

## Claims

1. A method for controlling hardness of a seamless molded body at an arbitrary position thereof, the seamless molded body being composed of two or more copolymers each having a crystalline portion and an elastomer portion, the method comprising:
preparing two or more molding members (1, 2) which are different from each other in a ratio of a crystalline portion and an elastomer portion therein by respectively using two or more copolymers which are different from each other in a ratio of a crystalline portion and an elastomer portion therein;
forming a composite member (3) in which a ratio of a crystalline portion and an elastomer portion varies at an arbitrary position thereof, by using the molding members (1, 2) by making them abut with each other at cut faces thereof or laminating them or placing pieces of one molding member on another molding member;
forming the composite member (3) to a configuration as desired;
heating the composite member (4) thus formed, in a mold, thereby melting the crystalline portion thereof; and
cooling and solidifying the composite member (4) thus heated, to obtain a seamless molded body having hardness controlled at an arbitrary position.

2. A method for controlling hardness of a seamless molded body at an arbitrary position thereof, the seamless molded body being composed of two or more copolymers each having a crystalline portion and an elastomer portion, the method comprising:
preparing two or more molding members (1, 2) which are different from each other in a distribution of a crystalline portion and an elastomer portion therein by respectively using two or more copolymers which are different from each other in a distribution of a crystalline portion and an elastomer portion in a polymer chain thereof;
forming a composite member (3) in which a distribution of a crystalline portion and an elastomer portion varies at an arbitrary position thereof, by using the molding members (1, 2) by making them abut with each other at cut faces thereof or laminating them or placing pieces of one molding member on another molding member;
forming the composite member (3) to a configuration as desired;
heating the composite member (4) thus formed, in a mold, thereby melting the crystalline portion thereof; and
cooling and solidifying the composite member (4) thus heated, to obtain a seamless molded body having hardness controlled at an arbitrary position.

3. A method for controlling hardness of a seamless molded body at an arbitrary position thereof, the seamless molded body being composed of two or more copolymers each having a crystalline portion and an elastomer portion, the method comprising:
preparing two or more molding members (1, 2) which are different from each other in crystallinity by respectively using two or more copolymers which are different from each other in crystallinity;
forming a composite member (3) of which crystallinity varies at an arbitrary position thereof, by using the molding members (1, 2) by making them abut with each other at cut faces thereof or laminating them or placing pieces of one molding member on another molding member;
forming the composite member (3) to a configuration as desired;
heating the composite member (4) thus formed, in a mold, thereby melting the crystalline portion thereof; and
cooling and solidifying the composite member (4) thus heated, to obtain a seamless molded body having hardness controlled at an arbitrary position.

4. The method for controlling hardness of a molded body of any of claims 1 to 3, wherein the crystalline portions of the two or more copolymers include the same type of monomer unit therein, respectively.

5. The method for controlling hardness of a molded body of any of claims 1 to 4, wherein the elastomer portions of the two or more copolymers include the same type of monomer unit therein, respectively.

6. The method for controlling hardness of a molded body of any of claims 1 to 5, wherein the crystalline portion of the copolymer includes a non-conjugated olefin unit therein.

7. The method for controlling hardness of a molded body of any of claims 1 to 6, wherein the elastomer portion of the copolymer includes a conjugated diene unit therein.

8. The method for controlling hardness of a molded body of any of claims 1 to 7, wherein at least one of the copolymers includes an aromatic vinyl unit as a monomer unit derived from an aromatic vinyl compound therein.

9. The method for controlling hardness of a molded body of any of claims 1 to 8, wherein the copolymer is a copolymer including a non-conjugated olefin unit and a conjugated diene unit, and no butylene unit therein.

10. The method for controlling hardness of a molded body of any of claims 1 to 8, wherein the copolymer is a copolymer including a non-conjugated olefin, a conjugated diene unit and an aromatic vinyl unit, and no butylene unit therein.

11. The method for controlling hardness of a molded body of any of claims 1 to 10, wherein the molded body formed by the molding members is pressurized when it is heated.

12. A molded body, **characterized in that** it is a seamless molded body having hardness controlled at an arbitrary position by the method for controlling hardness of a molded body of any of claims 1 to 11.

13. The method for controlling hardness of a molded body of any of claims 1 to 3, wherein hardness of the molded body gradually increases/decreases along a line linking two arbitrary positions of the molded body, with no sharp, stepwise changes.

14. The molded body of claim 12, wherein hardness of the molded body gradually increases/decreases along a line linking two arbitrary positions of the molded body, with no sharp, stepwise changes.

15. The method for controlling hardness of a molded body of any of claims 1 to 3, wherein the crystalline portion of each copolymer includes a non-conjugated olefin unit therein and the elastomer portion of each copolymer includes a conjugated diene unit therein

## Patentansprüche

1. Verfahren zur Steuerung der Härte eines nahtlosen Formkörpers in einer beliebigen Position davon, wobei der nahtlose Formkörper aus zwei oder mehr Copolymeren besteht, die jeweils einen kristallinen Abschnitt und einen elastomeren Abschnitt aufweisen, wobei das Verfahren umfasst:
Herstellen von zwei oder mehr Formgliedern (1, 2), die sich in einem Verhältnis eines kristallinen Abschnitts zu einem elastomeren Abschnitt darin voneinander unterscheiden, jeweils durch Verwenden von zwei oder mehr Copolymeren, die sich in einem Verhältnis eines kristallinen Abschnitts zu einem elastomeren Abschnitt darin voneinander unterscheiden;
Herstellen eines Verbundelements (3), bei dem ein Verhältnis eines kristallinen Abschnitts und eines elastomeren Abschnitts in einer beliebigen Position davon variiert, durch Verwenden der Formglieder (1, 2), indem man sie an Schnittflächen davon aneinander anliegen lässt, oder sie laminiert, oder Teile eines Formglieds auf einem anderen Formglied platziert;
Bilden des Verbundelements (3) in eine gewünschte Konfiguration;
Erhitzen des so gebildeten Verbundelements (4) in einer Form, wodurch der kristalline Abschnitt davon schmilzt; und
Abkühlen und Verfestigen des so erhitzten Verbundelements (4), um einen nahtlosen Formkörper zu erhalten, der eine gesteuerte Härte in einer beliebigen Position aufweist.

2. Verfahren zur Steuerung der Härte eines nahtlosen Formkörpers in einer beliebigen Position davon, wobei der nahtlose Formkörper aus zwei oder mehr Copolymeren besteht, die jeweils einen kristallinen Abschnitt und einen elastomeren Abschnitt aufweisen, wobei das Verfahren umfasst:
Herstellen von zwei oder mehr Formgliedern (1,2), die sich in einer Verteilung eines kristallinen Abschnitts zu einem elastomeren Abschnitt darin voneinander unterscheiden, jeweils durch Verwenden von zwei oder mehr Copolymeren, die sich in einer Verteilung eines kristallinen Abschnitts zu einem elastomeren Abschnitt in einer Polymer-Kette davon unterscheiden;
Herstellen eines Verbundelements (3), bei dem eine Verteilung eines kristallinen Abschnitts und eines elastomeren Abschnitts in einer beliebigen Position davon variiert, durch Verwenden der Formglieder (1, 2), indem man sie an Schnittflächen davon aneinander anliegen lässt, oder sie laminiert, oder Teile eines Formglieds auf einem anderen Formglied platziert;
Bilden des Verbundelements (3) in eine gewünschte Konfiguration;
Erhitzen des so gebildeten Verbundelements (4) in einer Form, wodurch der kristalline Abschnitt davon schmilzt; und
Abkühlen und Verfestigen des so erhitzten Verbundelements (4), um einen nahtlosen Formkörper zu erhalten, der eine gesteuerte Härte in einer beliebigen Position aufweist.

3. Verfahren zur Steuerung der Härte eines nahtlosen Formkörpers in einer beliebigen Position davon, wobei der nahtlose Formkörper aus zwei oder mehr Copolymeren besteht, die jeweils einen kristallinen Abschnitt und einen elastomeren Abschnitt aufweisen, wobei das Verfahren umfasst:
Herstellen von zwei oder mehr Formgliedern (1, 2), die sich in Kristallinität voneinander unterscheiden, jeweils durch Verwenden von zwei oder mehr Copolymeren, die sich in Kristallinität voneinander unterscheiden;
Herstellen eines Verbundelements (3), dessen Kristallinität in einer beliebigen Position davon variiert, durch Verwenden der Formglieder (1, 2), indem man sie an Schnittflächen davon aneinander anliegen lässt, oder sie laminiert, oder Teile eines Formglieds auf einem anderen Formglied platziert;
Bilden des Verbundelements (3) in eine gewünschte Konfiguration;
Erhitzen des so gebildeten Verbundelements (4) in einer Form, wodurch der kristalline Abschnitt davon schmilzt; und
Abkühlen und Verfestigen des so erhitzten Verbundelements (4), um einen nahtlosen Formkörper zu erhalten, der eine gesteuerte Härte in einer beliebigen Position aufweist.

4. Verfahren zur Steuerung der Härte eines Formkörpers nach einem der Ansprüche 1 bis 3, wobei die kristallinen Abschnitte der zwei oder mehr Copolymere jeweils die gleiche Art von Monomer-Einheit darin beinhalten.

5. Verfahren zur Steuerung der Härte eines Formkörpers nach einem der Ansprüche 1 bis 4, wobei die elastomeren Abschnitte der zwei oder mehr Copolymere jeweils die gleiche Art von Monomer-Einheit darin beinhalten.

6. Verfahren zur Steuerung der Härte eines Formkörpers nach einem der Ansprüche 1 bis 5, wobei der kristalline Abschnitt des Copolymers eine nicht-konjugierte Olefin-Einheit darin beinhaltet.

7. Verfahren zur Steuerung der Härte eines Formkörpers nach einem der Ansprüche 1 bis 6, wobei der elastomere Abschnitt des Copolymers eine konjugierte Dien-Einheit darin beinhaltet.

8. Verfahren zur Steuerung der Härte eines Formkörpers nach einem der Ansprüche 1 bis 7, wobei mindestens eines der Copolymere eine aromatische Vinyl-Einheit als Monomer-Einheit beinhaltet, die von einer aromatischen Vinyl-Verbindung darin abgeleitet ist.

9. Verfahren zur Steuerung der Härte eines Formkörpers nach einem der Ansprüche 1 bis 8, wobei das Copolymer ein Copolymer ist, das eine nicht-konjugierte Olefin-Einheit und eine konjugierte Dien-Einheit und keine Butylen-Einheit darin beinhaltet.

10. Verfahren zur Steuerung der Härte eines Formkörpers nach einem der Ansprüche 1 bis 8, wobei das Copolymer ein Copolymer ist, das eine nicht-konjugierte Olefin-Einheit, eine konjugierte Dien-Einheit und eine aromatische Vinyl-Einheit und keine Butylen-Einheit darin beinhaltet.

11. Verfahren zur Steuerung der Härte eines Formkörpers nach einem der Ansprüche 1 bis 10, wobei der durch die Formglieder gebildete Formkörper beim Erhitzen unter Druck gesetzt wird.

12. Formkörper, **dadurch gekennzeichnet, dass** er ein nahtloser Formkörper ist, der durch das Verfahren zur Steuerung der Härte eines Formkörpers nach einem der Ansprüche 1 bis 11 eine gesteuerte Härte in einer beliebigen Position aufweist.

13. Verfahren zur Steuerung der Härte eines Formkörpers nach einem der Ansprüche 1 bis 3, wobei die Härte des Formkörpers allmählich entlang einer Linie, die zwei beliebige Positionen des Formkörpers verbindet, ohne scharfe, stufenweise Änderungen zunimmt/abnimmt.

14. Formkörper nach Anspruch 12, wobei die Härte des Formkörpers allmählich entlang einer Linie, die zwei beliebige Positionen des Formkörpers verbindet, ohne scharfe, stufenweise Änderungen zunimmt/abnimmt.

15. Verfahren zur Steuerung der Härte eines Formkörpers nach einem der Ansprüche 1 bis 3, wobei der kristalline Abschnitt jedes Copolymers eine nicht-konjugierte Olefin-Einheit darin beinhaltet und der elastomere Abschnitt jedes Copolymers eine konjugierte Dien-Einheit darin beinhaltet.

## Revendications

1. Procédé de contrôle de la dureté d'un corps moulé sans soudure en un point quelconque de celui-ci, le corps moulé sans soudure étant composé de deux copolymères ou plus comportant chacun une partie cristalline et une partie élastomère, le procédé comprenant :
la préparation de deux éléments de moulage ou plus (1,2) qui diffèrent l'un de l'autre par un rapport d'une partie cristalline et d'une partie élastomère en utilisant respectivement deux copolymères ou plus qui diffèrent l'un de l'autre par un rapport d'une partie cristalline et d'une partie élastomère ;
la formation d'un élément composite (3) dans lequel un rapport entre une partie cristalline et une partie élastomère varie au niveau d'une position arbitraire de celui-ci, en utilisant les éléments de moulage (1, 2) en les mettant en butée l'un contre l'autre au niveau de leurs faces coupées ou en les laminant ou en plaçant des morceaux d'un élément de moulage sur un autre élément de moulage ;
la formation de l'élément composite (3) selon une configuration souhaitée ;
le chauffage de l'élément composite (4) ainsi formé, dans un moule, en faisant ainsi fondre sa partie cristalline ; et
le refroidissement et la solidification de l'élément composite (4) ainsi chauffé, pour obtenir un corps moulé sans soudure présentant une dureté contrôlée au niveau d'une position arbitraire.

2. Procédé de contrôle de la dureté d'un corps moulé sans soudure en un point quelconque de celui-ci, le corps moulé sans soudure étant composé de deux copolymères ou plus comportant chacun une partie cristalline et une partie élastomère, le procédé comprenant :
la préparation de deux éléments de moulage ou plus (1,2) qui diffèrent l'un de l'autre par une distribution d'une partie cristalline et d'une partie élastomère en utilisant respectivement deux copolymères ou plus qui diffèrent l'un de l'autre par une distribution d'une partie cristalline et d'une partie élastomère dans une chaîne polymère de ceux-ci ;
la formation d'un élément composite (3) dans lequel une distribution entre une partie cristalline et une partie élastomère varie au niveau d'une position arbitraire de celui-ci, en utilisant les éléments de moulage (1, 2) en les mettant en butée l'un contre l'autre au niveau de leurs faces coupées ou en les laminant ou en plaçant des morceaux d'un élément de moulage sur un autre élément de moulage ;
la formation de l'élément composite (3) selon une configuration souhaitée ;
le chauffage de l'élément composite (4) ainsi formé, dans un moule, en faisant ainsi fondre sa partie cristalline ; et
le refroidissement et la solidification de l'élément composite (4) ainsi chauffé, pour obtenir un corps moulé sans soudure présentant une dureté contrôlée au niveau d'une position arbitraire.

3. Procédé de contrôle de la dureté d'un corps moulé sans soudure en un point quelconque de celui-ci, le corps moulé sans soudure étant composé de deux copolymères ou plus comportant chacun une partie cristalline et une partie élastomère, le procédé comprenant :
la préparation de deux éléments de moulage ou plus (1,2) qui diffèrent l'un de l'autre par une cristallinité en utilisant respectivement deux copolymères ou plus qui diffèrent l'un de l'autre par une cristallinité ;
la formation d'un élément composite (3) dont une cristallinité varie au niveau d'une position arbitraire de celui-ci, en utilisant les éléments de moulage (1, 2) en les mettant en butée l'un contre l'autre au niveau de leurs faces coupées ou en les laminant ou en plaçant des morceaux d'un élément de moulage sur un autre élément de moulage ;
la formation de l'élément composite (3) selon une configuration souhaitée ;
le chauffage de l'élément composite (4) ainsi formé, dans un moule, en faisant ainsi fondre sa partie cristalline ; et
le refroidissement et la solidification de l'élément composite (4) ainsi chauffé, pour obtenir un corps moulé sans soudure présentant une dureté contrôlée au niveau d'une position arbitraire.

4. Procédé de contrôle de la dureté d'un corps moulé selon l'une quelconque des revendications 1 à 3, dans lequel les parties cristallines des deux copolymères ou plus incluent respectivement le même type d'unité monomère.

5. Procédé de contrôle de la dureté d'un corps moulé selon l'une quelconque des revendications 1 à 4, dans lequel les parties élastomères des deux copolymères ou plus incluent respectivement le même type d'unité monomère.

6. Procédé de contrôle de la dureté d'un corps moulé selon l'une quelconque des revendications 1 à 5, dans lequel la partie cristalline du copolymère inclut une unité oléfine non conjuguée.

7. Procédé de contrôle de la dureté d'un corps moulé selon l'une quelconque des revendications 1 à 6, dans lequel la partie élastomère du copolymère inclut une unité diène conjuguée.

8. Procédé de contrôle de la dureté d'un corps moulé selon l'une quelconque des revendications 1 à 7, dans lequel au moins un des copolymères inclut une unité vinyle aromatique comme unité monomère dérivée d'un composé vinyle aromatique.

9. Procédé de contrôle de la dureté d'un corps moulé selon l'une quelconque des revendications 1 à 8, dans lequel le copolymère est un copolymère incluant une unité oléfine non conjuguée et une unité diène conjuguée, et aucune unité butylène.

10. Procédé de contrôle de la dureté d'un corps moulé selon l'une quelconque des revendications 1 à 8, dans lequel le copolymère est un copolymère incluant une oléfine non conjuguée, une unité diène conjuguée et une unité vinyle aromatique, et aucune unité butylène.

11. Procédé de contrôle de la dureté d'un corps moulé selon l'une quelconque des revendications 1 à 10, dans lequel le corps moulé formé par les éléments de moulage est mis sous pression lorsqu'il est chauffé.

12. Corps moulé, **caractérisé en ce qu'**il s'agit d'un corps moulé sans soudure présentant une dureté contrôlée au niveau d'une position arbitraire par le procédé de contrôle de la dureté d'un corps moulé selon l'une quelconque des revendications 1 à 11.

13. Procédé de contrôle de la dureté d'un corps moulé selon l'une quelconque des revendications 1 à 3, dans lequel la dureté du corps moulé augmente/diminue progressivement le long d'une ligne reliant deux positions arbitraires du corps moulé, sans changements brusques par échelon.

14. Corps moulé selon la revendication 12, dans lequel la dureté du corps moulé augmente/diminue progressivement le long d'une ligne reliant deux positions arbitraires du corps moulé, sans changements brusques par échelon.

15. Procédé de contrôle de la dureté d'un corps moulé selon l'une quelconque des revendications 1 à 3, dans lequel la partie cristalline de chaque copolymère inclut une unité oléfine non conjuguée et la partie élastomère de chaque copolymère inclut une unité diène conjuguée.
